# EUROPEAN PATENT APPLICATION

(11) **EP 4 760 118 A1**
(43) Date of publication of application: **17.06.2026**
(21) Application number: 24851311.1
(22) Date of filing: 14.03.2024
(51) Int. Cl.: F16C 29/06, F16C 33/78

(54) **LINEAR MOTION GUIDE DEVICE**

(30) Priority: 09.08.2023 JP 2023130136
(71) Applicant: NSK LTD., Tokyo 141-8560 (JP)
(72) Inventor: YANO, Yoshinori, Fujisawa-shi, Kanagawa 251-8501 (JP)
(74) Representative: Grünecker Patent- und Rechtsanwälte PartG mbB
(86) International application number: PCT/JP2024/010055
(87) International publication number: WO 2025/032877

(57) **Abstract**

The present invention provides a linear motion guide device provided with a side seal to provide a seal between a slider and a guide rail. The side seal has a retaining plate disposed on the slider side, a cover, and a sealing member disposed between the cover and the retaining plate along the length direction of the guide rail. The sealing member has a body sandwiched between the retaining plate and the cover and a lip section extending from the body toward the guide rail side. In a state in which the lip section is in abutment against the guide rail, a coupling section between the lip section and the body at a predetermined location in the width direction of the guide rail is apart from the guide rail farther than a coupling section between the lip section and the body at a location other than the predetermined location.

## Description

### TECHNICAL FIELD

The present invention relates to a linear motion guide device.

### BACKGROUND ART

A linear motion guide device includes a substantially annular circulation path in which a rolling passage of a rolling element formed between a raceway surface of a guide rail and a raceway surface of a slider main body, a return passage of the rolling element formed in the slider main body, and a direction change path of the rolling element formed in an end cap communicate with each other, and the rolling element circulates in the circulation path.

In the linear motion guide device, a contact seal for protecting a slider, such as a side seal, an inner seal, or an under seal, is generally used. In the contact seal, there is a demand for a shape correction technique capable of bringing a soft elastic sliding component, which tends to have low shape accuracy due to warpage or deflection caused by rubber molding, injection molding, or the like, close to a cross-sectional shape of a rail, which is a counterpart member to be sealed, or at least pressing the sliding component tightly against the rolling surface without a gap in order to remove foreign matter on the rolling surface through which the rolling element passes.

As a shape correction technique for the elastic sliding component of the contact seal for a linear motion guide device, there are known a technique by entirely restraining an elastic member as in Patent Literature 1 and a technique for partially restraining the elastic member as in Patent Literature 2.

### CITATION LIST

### PATENT LITERATURE

Patent Literature 1: JP6295624B
Patent Literature 2: JP6863550B

### SUMMARY OF INVENTION

### TECHNICAL PROBLEM

According to these shape correction techniques, a shape correction component made of hard plastic, which is more likely to exhibit shape accuracy, is used to provide a seal interference (pressing force), and a certain effect is obtained.

However, a rail of a general linear motion guide device has a discontinuous portion such as a rail attachment hole or a rail joint portion. When a seal member, which is a sliding component of the contact seal, passes through such a discontinuous portion, a sliding portion may be damaged or worn by an edge portion of the discontinuous portion.

This problem tends to become more pronounced as a result of reducing chamfering of the edge portions of the rail attachment hole and the rail joint portion to prevent accumulation of foreign matter, which makes it easier for the seal member to collide with the edge portion of the rail, which is a counterpart member. In addition, when a large number of non-completely rigid components such as the rolling element circulation member and the lubricating member are stacked between the seal member and the slider, the seal member having an interference may strongly collide with the edge portion of the rail, which is the counterpart member, due to the influence of deformation, misalignment, or the like of the members.

On the other hand, for example, the impact force on the sliding portion of the seal member can be alleviated by taking measures such as attaching a rail upper surface cover or a dedicated cap to the attachment hole portion of the rail or attaching a tape to the joint portion of the rail. However, in many cases, a cover component or the like is not attached to an attachment hole portion or a joint portion of a rail in consideration of workability at the time of a trial operation such as performing running-in during shipping inspection of a linear motion guide device or adjusting motion accuracy such as running parallelism of a slider after attaching the rail of the linear motion guide device to another device with a bolt or the like. Therefore, in a case where the sliding portion of the seal member is damaged during the trial operation, a desired sealing performance may not be obtained during an actual operation of a device to which the linear motion guide device is attached.

The present invention has been made in view of the problems of the related art, and an object of the present invention is to provide a linear motion guide device including a seal member capable of preventing damage or the like of a sliding portion, including during a trial operation, for example.

### SOLUTION TO PROBLEM

A linear motion guide device according to the present invention includes:
a guide rail having an attachment hole;
a slider; and
a plurality of rolling elements, in which
the guide rail and the slider have rolling surfaces arranged to face each other to form a rolling passage of the rolling elements,
as the rolling elements roll in the rolling passage, one of the guide rail and the slider moves linearly relative to the other,
a side seal that seals between the slider and the guide rail is provided,
the side seal includes a holding plate disposed on the slider side, a cover, and a seal member disposed between the cover and the holding plate along a length direction of the guide rail,
the seal member includes a main body sandwiched between the holding plate and the cover, and a lip portion extending from the main body toward the guide rail side, and
in a state where the lip portion abuts against the guide rail, a connection portion between the lip portion and the main body at a predetermined position in a width direction of the guide rail is farther from the guide rail than a connection portion between the lip portion and the main body at a position other than the predetermined position.

### ADVANTAGEOUS EFFECTS OF INVENTION

According to the present invention, it is possible to provide a linear motion guide device including a seal member capable of preventing damage or the like of a sliding portion, including during a trial operation, for example.

### BRIEF DESCRIPTION OF DRAWINGS

Fig. 1 is a perspective view of a linear motion guide device according to a first embodiment.
Fig. 2 is a view illustrating a state of a side seal according to the present embodiment disassembled from a slider.
Fig. 3 is a view of the linear motion guide device of Fig. 1 as viewed from an arrow III direction.
Fig. 4 is a view illustrating a configuration of Fig. 3 taken along a line IV-IV.
Fig. 5 is a perspective view of the side seal.
Fig. 6 is a view illustrating a state of the side seal disassembled.
Figs. 7A and 7B are enlarged cross-sectional views corresponding to an arrow VII portion in Fig. 3, in which Fig. 7A illustrates a state where a lip portion of the side seal 20 does not abut against a guide rail 100, and Fig. 7B illustrates a state where the lip portion of the side seal 20 abuts against the guide rail 100.
Figs. 8A and 8B are views illustrating cross sections parallel to the cross sections of Figs. 7A and 7B, in which Fig. 8A illustrates a state where the lip portion of the side seal 20 does not abut against the guide rail 100, and Fig. 8B illustrates a state where the lip portion of the side seal 20 abuts against the guide rail 100.
Fig. 9 is a view illustrating a configuration of Fig. 7A taken along a line IX-IX.
Fig. 10 is a view illustrating a configuration of Fig. 7B taken along a line X-X.
Fig. 11A is a diagram illustrating a part of an intermediate wall according to the first embodiment, and Fig. 11B is a diagram illustrating a part of an intermediate wall according to a modification.
Fig. 12 is a cross-sectional view similar to Fig. 10, illustrating a side seal according to a second embodiment.
Fig. 13 is a cross-sectional view similar to Fig. 7B, illustrating a side seal according to a third embodiment.

### DESCRIPTION OF EMBODIMENTS

Hereinafter, a linear motion guide device according to embodiments of the present invention will be described with reference to the accompanying drawings.

### [First Embodiment]

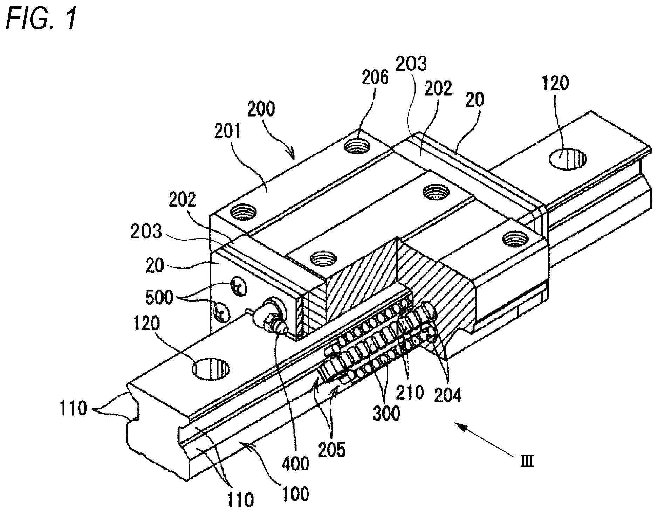

Fig. 1 is a perspective view illustrating a linear motion guide device according to a first embodiment in a partially cut state. The linear motion guide device according to the present embodiment includes a guide rail 100, a slider 200, and a plurality of rollers (rolling elements) 300. The guide rail 100 and the slider 200 have rolling surfaces 110, 210 arranged to face each other to form a rolling passage of the rollers 300.

The slider 200 includes, in a length direction of the guide rail 100, a slider main body 201, a pair of end caps 202 fixed to both ends of the slider main body 201, a pair of solid lubricant cases 203 fixed to both ends of the end caps 202, and a pair of side seals 20 fixed to both ends of the case 203. The rolling surface 210 is formed on the slider main body 201. The side seals 20 disposed at both ends of the slider 200 in a rail direction seal gaps between the slider 200 and an upper surface and both side surfaces of the guide rail 100 by seal members.

The solid lubricant case 203 is used to supply, for example, grease seeping from the solid lubricant contained in the case 203 for a long period of time, and is described in detail in, for example, JP2004-340362A, and thus description thereof is omitted here.

The slider 200 also has a return passage 204 for the rollers 300, and a direction change path 205 for communicating the return passage 204 with the rolling passage. The return passage 204 is formed in the slider main body 201, and the direction change path 205 is formed in the end cap 202. A female screw 206 for attaching a table or the like by screwing is formed on an upper surface of the slider 200.

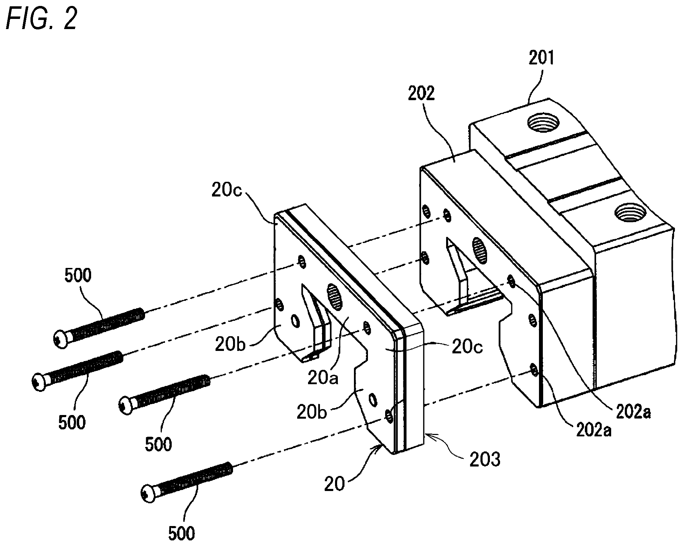

As illustrated in Fig. 2, attachment holes for a grease nipple 400 are formed in the side seal 20, the solid lubricant case 203, and the end cap 202. The lubricant is introduced from the grease nipple 400 into an oil passage of the end cap 202 to lubricate the linear motion guide device. The side seal 20, the solid lubricant case 203, and the end cap 202 are fixed to the slider main body 201 using bolts 500. The guide rail 100 has an attachment hole 120 for attaching the guide rail 100 to an attachment portion such as a base with a bolt.

In the linear motion guide device, the rolling passage, the return passage, and the direction change path constitute a circulation path of the rolling elements, and the rollers 300 circulate in the circulation path, so that one of the guide rail 100 and the slider 200 linearly moves relative to the other.

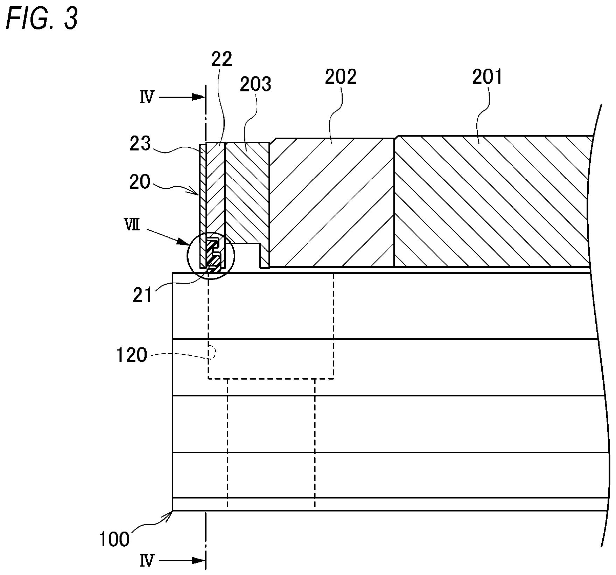

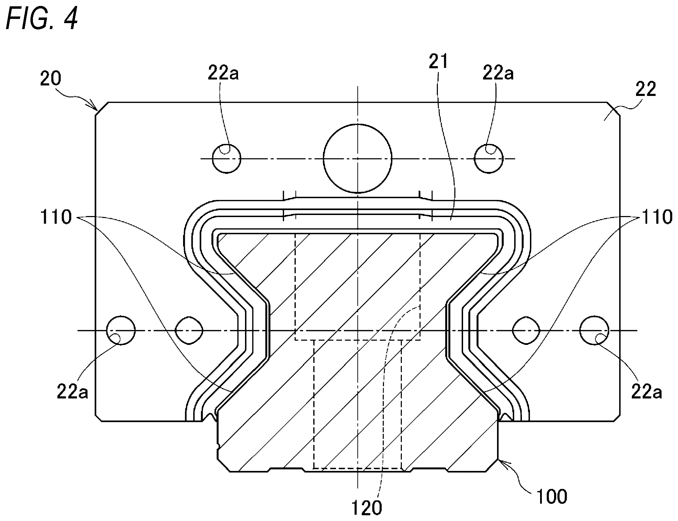

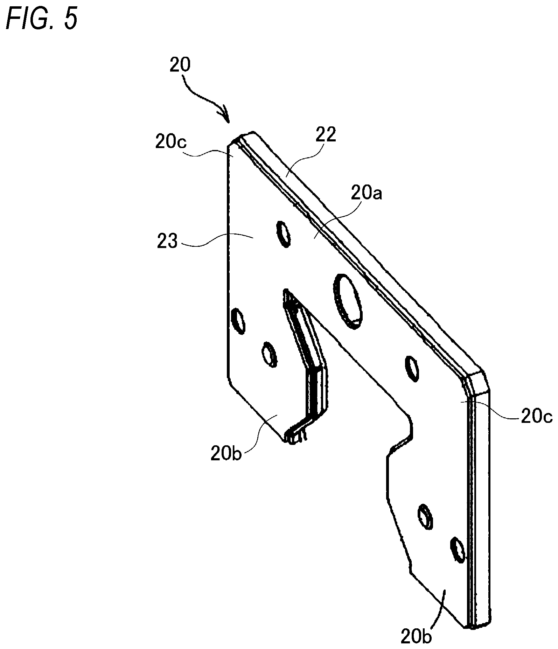

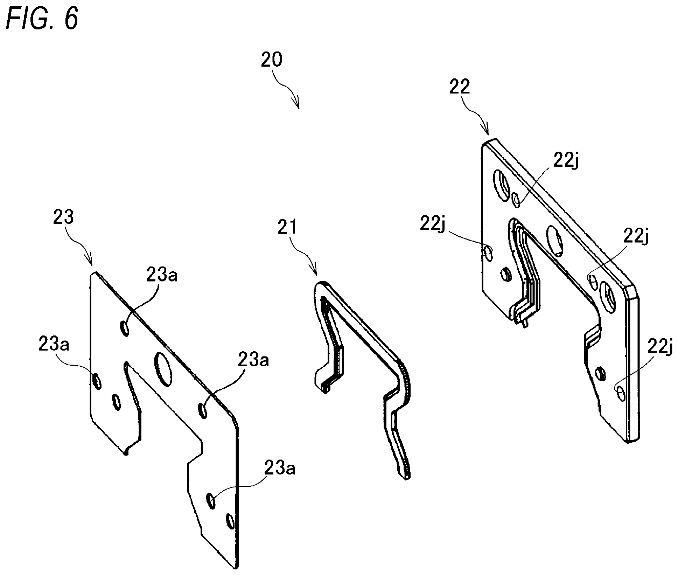

Fig. 2 is a view illustrating a state of the side seal according to the present embodiment disassembled from the slider. Fig. 3 is a view of the linear motion guide device of Fig. 1 as viewed from an arrow III direction, but the rollers are omitted. Fig. 4 is a view illustrating a configuration of Fig. 3 taken along a line IV-IV, and illustrates a holding plate 22 and a seal member 21 of the side seal 20. Fig. 5 is a perspective view of the side seal 20. Fig. 6 is a view illustrating a state of the side seal 20 disassembled.

As illustrated in Figs. 2 to 6, the side seal 20 has substantially the same outer shape (substantially inverted U shape) as the end cap 202 as viewed in a guide rail direction, and includes an upper portion 20a disposed on an upper side of the guide rail 100, a pair of side portions 20b disposed on left and right sides of the guide rail 100, and a pair of corner portions 20c disposed obliquely above the guide rail.

As illustrated in Fig. 6, the side seal 20 includes the seal member 21, the holding plate 22, and a cover 23.

The holding plate 22 has a plurality of holes 22j for bolt insertion, and the cover 23 also has a plurality of holes 23a for bolt insertion. The seal member 21 is sandwiched between the holding plate 22 and the cover 23, and the bolt 500 inserted into the holes 23a and 22j from the outside of the cover 23 is inserted into the hole 202a of the end cap 202 and then screwed into a screw hole of the slider main body 201, whereby the side seal 20 is attached to the end cap 202 via the solid lubricant case 203.

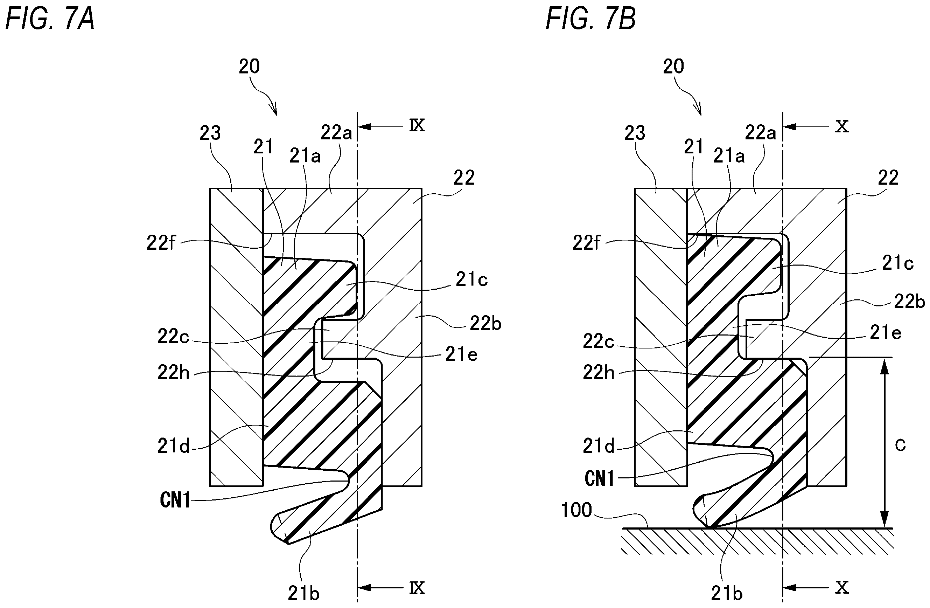

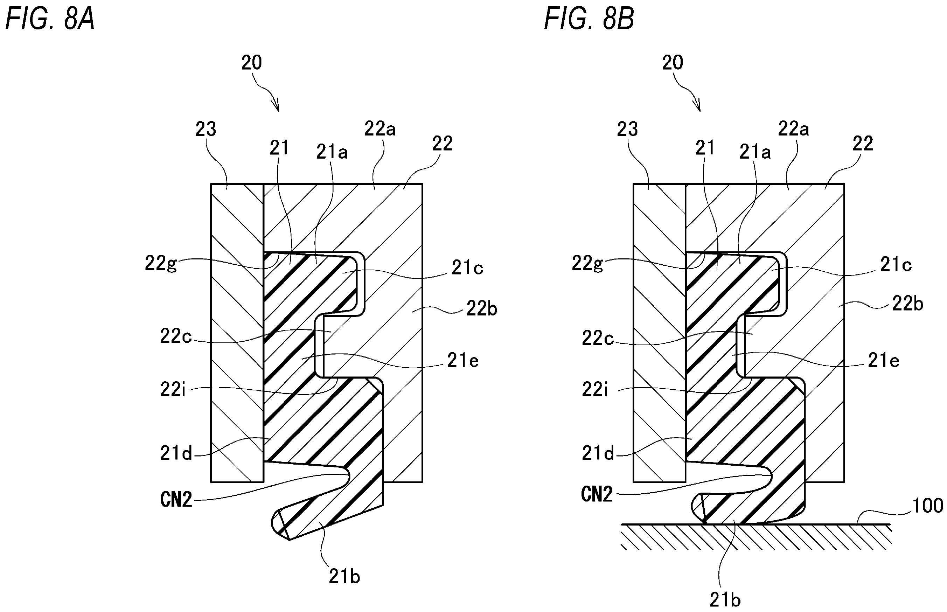

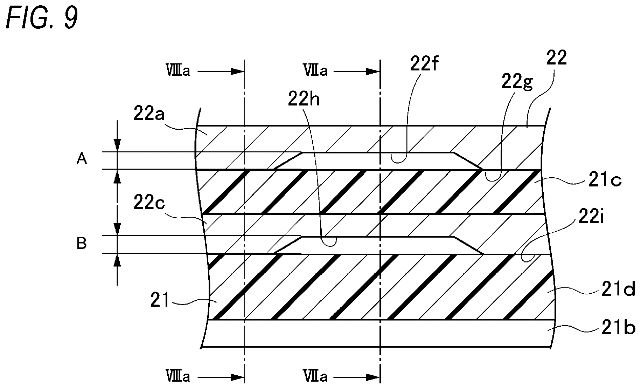

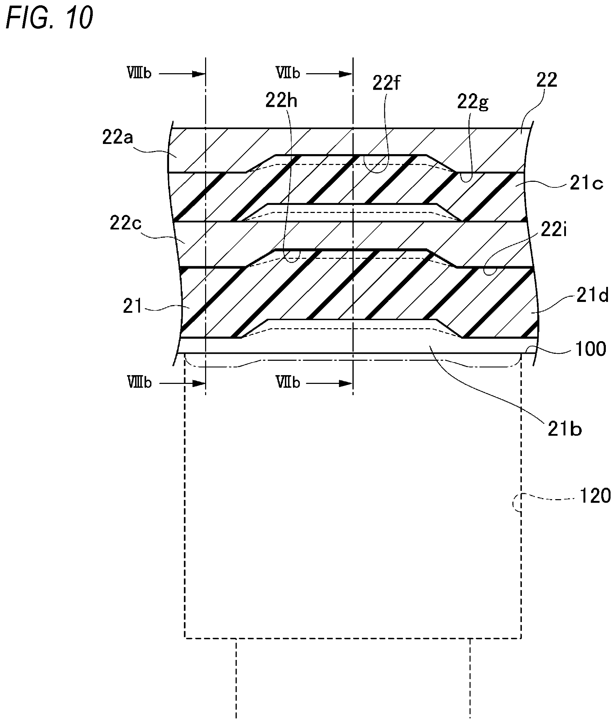

Figs. 7A and 7B are enlarged cross-sectional views corresponding to an arrow VII portion in Fig. 3, in which Fig. 7A illustrates a state where a lip portion of the side seal 20 does not abut against the guide rail 100, and Fig. 7B illustrates a state where the lip portion of the side seal 20 abuts against the guide rail 100. Figs. 8A and 8B are views illustrating cross sections parallel to the cross sections of Figs. 7A and 7B, in which Fig. 8A illustrates a state where the lip portion of the side seal 20 does not abut against the guide rail 100, and Fig. 8B illustrates a state where the lip portion of the side seal 20 abuts against the guide rail 100. Fig. 9 is a view illustrating a configuration of Fig. 7A taken along a line IX-IX, and Fig. 10 is a view illustrating a configuration of Fig. 7B taken along a line X-X. In Fig. 9, a cross-sectional view taken along a line VIIa-VIIa corresponds to Fig. 7A, and in Fig. 9, a cross-sectional view taken along a line VIIIa-VIIIa corresponds to Fig. 8A. In Fig. 10, a cross-sectional view taken along a line VIIb-VIIb corresponds to Fig. 7B, and in Fig. 10, a cross-sectional view taken along a line VIIIb-VIIIb corresponds to Fig. 8B.

In Fig. 7A to Fig. 8B, the cover 23 is made of a uniform plate material. The seal member 21 is formed of an elastically deformable material, has a uniform cross-sectional shape orthogonal to a rail width direction along the rail width direction, and is formed by connecting a main body 21a and a lip portion 21b. The main body 21a has a substantially inverted U shape in the cross sections of Fig. 7A to Fig. 8B, and specifically includes a main body upper portion 21c, a main body lower portion 21d, and a main body intermediate portion 21e connecting the main body upper portion 21c and the main body lower portion 21d. The main body upper portion 21c, the main body lower portion 21d, and the main body intermediate portion 21e abut against opposing flat surfaces of the cover 23. The main body upper portion 21c and the main body lower portion 21d protrude toward the holding plate 22 with respect to the main body intermediate portion 21e.

The lip portion 21b extends obliquely with respect to a surface of the guide rail 100 in a cantilevered manner from the vicinity of the holding plate 22 on the lower surface (surface facing the guide rail 100) of the main body lower portion 21d toward the cover 23 side.

The holding plate 22 includes an upper wall 22a extending in a rail length direction and abutting against an upper end of the cover 23, a side wall 22b connected to an end of the upper wall 22a and extending toward the guide rail 100, and an intermediate wall 22c extending from an intermediate position of the side wall 22b toward the cover 23. In a state assembled as the side seal 20, there is a gap between the main body upper portion 21c and the side wall 22b facing the main body upper portion 21c, and there is a gap between the main body intermediate portion 21e and a front end of the intermediate wall 22c facing the main body intermediate portion 21e. On the other hand, the main body lower portion 21d abuts against both the cover 23 and the side wall 22b, whereby the seal member 21 is sandwiched and held by the cover 23 and the holding plate 22.

The front end of the intermediate wall 22c is positioned between the main body upper portion 21c and the main body lower portion 21d. Therefore, detachment of the seal member 21 from between the cover 23 and the holding plate 22 in the assembled state is prevented.

A cross-sectional shape of the holding plate 22 changes depending on a position in the rail width direction. In Figs. 9 and 10, a lower surface of the upper wall 22a (surface facing the guide rail 100) includes an upper shallow groove 22f formed across the center of the guide rail 100 and extending in the rail length direction, and planar upper lower surfaces 22g disposed on both sides of the upper shallow groove 22f in the rail width direction.

A lower surface (surface facing the guide rail 100 side) of the intermediate wall 22c includes an intermediate shallow groove (also referred to as a relief portion) 22h formed at a position corresponding to the upper shallow groove 22f and extending in the rail length direction, and planar intermediate lower surfaces 22i disposed on both sides of the intermediate shallow groove 22h in the rail width direction. In the present embodiment, as illustrated in Fig. 10, the upper shallow groove 22f and the intermediate shallow groove 22h are formed between both end portions of the attachment hole 120 in the rail width direction.

In a state before the seal member 21 abuts against the guide rail 100 (see Fig. 9), the main body upper portion 21c of the seal member 21 abuts against the upper lower surface 22g of the upper wall 22a of the holding plate 22, but hardly enters the upper shallow groove 22f, and thus a gap A is present between a bottom surface (surface facing the guide rail 100 side) of the upper shallow groove 22f and the main body upper portion 21c.

In addition, in a state before the seal member 21 abuts against the guide rail 100 (see Fig. 9), the main body lower portion 21d of the seal member 21 abuts against the intermediate lower surface 22i of the intermediate wall 22c of the holding plate 22, but hardly enters the intermediate shallow groove 22h, and thus a gap B is present between a bottom surface (surface facing the guide rail 100 side) of the intermediate shallow groove 22h and the main body lower portion 21d. At this time, as illustrated in Fig. 7A and Fig. 8A, it is preferable that a connection portion CN1 between the lip portion 21b and the main body 21a at a position (predetermined position) corresponding to the intermediate shallow groove 22h in the rail width direction and a connection portion CN2 between the lip portion 21b and the main body 21a at a position other than the predetermined position are at substantially the same distance from the guide rail 100.

In a state where the seal member 21 abuts against the guide rail 100 (see Fig. 7B and Fig. 8B), a vicinity (lowermost edge) of a front end of the lip portion 21b abuts against the guide rail 100 (here, in line contact) to be elastically deformed, and exhibits a sealing function in the rail width direction. Since the lip portion 21b of the seal member 21 has an interference with respect to the guide rail 100, a front end position of the lip portion 21b when passing through the attachment hole 120 is a position indicated by a one-dot chain line in Fig. 10.

At this time, although a reaction force from the guide rail 100 is transmitted to the main body 21a via the lip portion 21b, a portion of the main body lower portion 21d abutting against the intermediate lower surface 22i maintains a fixed state. On the other hand, a portion of the main body lower portion 21d facing the intermediate shallow groove 22h is elastically deformed due to the presence of the gap B (see Fig. 9) between the portion of the main body lower portion 21d and the intermediate shallow groove 22h, and the main body lower portion 21d enters the intermediate shallow groove 22h as illustrated in Fig. 10 and abuts against the bottom surface of the intermediate shallow groove 22h here.

The reaction force from the guide rail 100 is further transmitted to the main body upper portion 21c via the main body intermediate portion 21e. The portion of the main body upper portion 21c abutting against the upper lower surface 22g maintains the fixed state, but a portion of the main body upper portion 21c facing the upper shallow groove 22f is elastically deformed due to the presence of the gap A (see Fig. 9) with the upper shallow groove 22f, and the main body upper portion 21c enters the upper shallow groove 22f as illustrated in Fig. 10 and abuts against the bottom surface of the upper shallow groove 22f here.

As is apparent from a comparison between Fig. 7B and Fig. 8B, a pivot point of the lip portion 21b (the connection portion with the main body 21a) is located such that the lip portion 21b (see Fig. 7B) located at a position corresponding to the intermediate shallow groove 22h is a position farther from the guide rail 100 than the lip portion 21b (see Fig. 8B) abutting against the intermediate lower surface 22i. In other words, the connection portion CN1 between the lip portion 21b and the main body 21a at a position (predetermined position) corresponding to the intermediate shallow groove 22h in the rail width direction is farther from the guide rail 100 than the connection portion CN2 between the lip portion 21b and the main body 21a at a position other than the predetermined position. Therefore, the lip portion 21b at a position corresponding to the intermediate shallow groove 22h has a smaller interference than the lip portion 21b abutting against the intermediate lower surface 22i.

Therefore, a surface pressure distribution of the lip portion 21b in the rail width direction can be adjusted such that a surface pressure of the lip portion 21b at the position corresponding to the intermediate shallow groove 22h with respect to the guide rail 100 is lower than a surface pressure of the lip portion 21b abutting against the intermediate lower surface 22i. Therefore, when the lip portion 21b slides with respect to the guide rail 100 in a state where the side seal 20 is assembled to the slider 200, an impact force received from the attachment hole 120 when passing through the attachment hole 120 from the lip portion 21b can be alleviated, and when the guide rail has a joint portion, an impact force from an edge portion can be reduced, thereby preventing damage or the like of a sliding portion including during a trial operation.

By forming the upper shallow groove 22f in the upper wall 22a, the main body upper portion 21c of the seal member 21 easily moves upward, and thus the main body lower portion 21d also easily moves upward, so that the surface pressure distribution of the lip portion 21b can be more effectively adjusted.

If the intermediate shallow groove 22h is not formed in the intermediate wall 22c, since the surface pressure distribution of the lip portion 21b is uniform in the rail width direction, the rigidity in a rail traveling direction becomes too strong as a whole, the impact force from the attachment hole 120 increases, and in some cases, the lip portion 21b may be damaged. By forming the intermediate shallow groove 22h in the intermediate wall 22c as in the present embodiment, the impact force when passing through the attachment hole 120 can be alleviated.

By freely setting a distance C (see Fig. 7B) from the guide rail 100 to the bottom surface of the intermediate shallow groove 22h of the intermediate wall 22c, for example, the main body lower portion 21d can be prevented from abutting against the bottom surface of the intermediate shallow groove 22h in a state where the lip portion 21b abuts against the guide rail 100, thereby adjusting the surface pressure distribution of the lip portion 21b.

In an actual product, the interference of the lip portion 21b of the seal member 21 with respect to the guide rail 100 is large or small due to an influence of an assembly error of the side seal 20 with respect to the slider 200. When the interference is large, the lip portion 21b is largely deformed such that the main body upper portion 21c abuts against the bottom surface of the upper shallow groove 22f and the main body lower portion 21d abuts against the bottom surface of the intermediate shallow groove 22h as indicated by a solid line in Fig. 10. On the other hand, when the interference is small, the lip portion 21b is prevented from being deformed so that the gap is formed between the bottom surface of the upper shallow groove 22f and the main body upper portion 21c and the gap is formed between the bottom surface of the intermediate shallow groove 22h and the main body lower portion 21d as indicated by a broken line in Fig. 10. As a result, even when the interference is large, it is possible to prevent the lip portion 21b from being damaged when passing through the attachment hole 120, and even when the interference is small, it is possible to ensure a necessary and sufficient sealing performance.

However, in a case where the intermediate shallow groove 22h is expanded in the entire rail width direction of the intermediate wall 22c (that is, in a case where the relief portion is the entire intermediate wall 22c), the rigidity of the lip portion 21b in the rail traveling direction becomes too low, and the sealing performance may be deteriorated. Therefore, the intermediate shallow groove 22h is preferably provided in a part of the intermediate wall 22c in the rail width direction.

Even if there is a resin component such as the lubricant case 203 between the side seal 20 and the end cap 202, an increase in a pressing force of the lip portion 21b due to an attachment error caused by misalignment, deformation, or the like caused by the resin component can be alleviated by an impact force alleviating function by providing the intermediate shallow groove 22h, and the front end of the lip portion 21b can be prevented from being damaged when passing through the attachment hole 120.

According to an examination result of the present inventors, it has been found that even when the lubricant case 203 is disposed, the lip portion 21b can be brought into contact with the guide rail 100 over the rail width direction by setting a relief amount of the relief portion (depth of the intermediate shallow groove 22h) within a range in which no gap is formed between the lip portion 21b and the guide rail 100 from a measurement result of the misalignment due to the lubricant case 203 provided between the side seal 20 and the end cap 202 and the interference of the lip portion 21b.

In the present embodiment, the relief portion for reducing the interference, that is, the intermediate shallow groove 22h is provided corresponding to a portion passing through the attachment hole 120 or the like in which the lip portion 21b is particularly easily damaged during an operation of the linear motion guide device. The relief portion is provided in the normal direction with respect to a surface of the guide rail 100. In addition, although the seal member 21 is sandwiched between the cover 23 and the holding plate 22 as viewed in the rail traveling direction, at least in a state before the seal member 21 is fixed to the slider 200 by the bolt 500, a portion sandwiched between the cover 23 and the holding plate 22 is in a slight preload state to the extent that the lip portion 21b can be deformed along the relief portion due to a slight gap or a reaction force of a pressing force of the lip portion 21b after insertion of the rail.

With this structure, even if there is an attachment error such as misalignment or inclination due to the influence of an intermediate member or the like, a seal pressing force of the lip portion 21b does not excessively increase, and the lip portion 21b having the interference is made uniform, so that the impact force when the lip portion 21b collides with the attachment hole 120 or the edge portion of the rail joint portion (if present) is alleviated, and thus it is possible to prevent the lip portion 21b from being damaged.

The relief portion is provided, for example, corresponding to the attachment hole 120. By a relief width in the rail width direction at this time, the amount of relief in an upper-lower direction of the guide rail 100 can be adjusted even in the lip portion 21b having the same rigidity. When the amount of relief in the upper-lower direction is set so that the end surface of the lip portion 21b comes into contact with the relief, the seal pressing force does not become constant, but the minimum interference can be set, and this may be applied.

### [Modification]

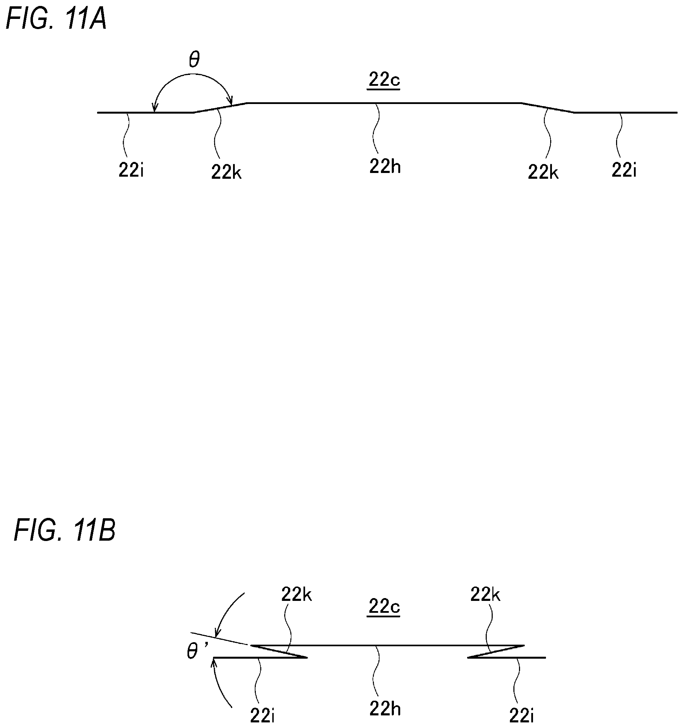

Fig. 11A is a diagram illustrating a state of a part of the intermediate wall 22c according to the first embodiment as viewed in the rail length direction, and Fig. 11B is a diagram illustrating a part of the intermediate wall 22c according to a modification as viewed in the same direction. In the first embodiment, as illustrated in Fig. 11A, inclined surfaces 22k constituting both side surfaces of the intermediate shallow groove 22h are inclined at an angle θ which is an obtuse angle with respect to the intermediate lower surface 22i. The intersection angle θ, which is the obtuse angle, is preferably, for example, 160 degrees or more and less than 180 degrees.

On the other hand, in the modification illustrated in Fig. 11B, the inclined surfaces 22k constituting both side surfaces of the intermediate shallow groove 22h intersect the intermediate lower surface 22i at an intersection angle θ' which is an acute angle. When the intersection angle θ' between the inclined surface 22k and the intermediate lower surface 22i is an acute angle, the interference can be reduced even with a narrower width due to local deformation of the lip portion 21b. However, there is a case where the seal life is reduced, a difference in seal contact pressure is extremely generated, and a pocket portion (foreign matter accumulation) in which foreign matter is likely to accumulate is generated, so that the sealing performance is deteriorated. Therefore, as illustrated in Fig. 11A, the intersection angle is preferably an obtuse angle.

In the above embodiment, in the cross section illustrated in Fig. 9, while the main body upper portion 21c and the main body lower portion 21d of the seal member 21 have a uniform thickness, the upper shallow groove 22f is formed in the upper wall 22a of the holding plate 22, and the intermediate shallow groove 22h is formed in the side wall 22b, so that a gap is provided between the main body upper portion 21c and the upper shallow groove 22f and a gap is provided between the main body lower portion 21d and the intermediate shallow groove 22h. On the other hand, instead of providing the upper wall 22a and the side wall 22b of the holding plate 22 with a uniform cross section, the groove obtained by inverting the upper shallow groove 22f is provided in the main body upper portion 21c of the seal member 21, and the groove obtained by inverting the intermediate shallow groove 22h is provided in the main body lower portion 21d, so that the same gap can be secured.

Even if the side seal does not have the configuration of the holding plate, the seal member, or the cover, the effect of the relief portion for reducing the interference described above can be obtained. For example, in the case of a side seal in which the seal member is formed of rubber bonded to a core metal of a metal plate instead of the holding plate, the interference of the lip of the seal member can be adjusted by not bonding rubber to the core metal (or reducing a bonding range) at a position facing the attachment hole 120.

### [Second Embodiment]

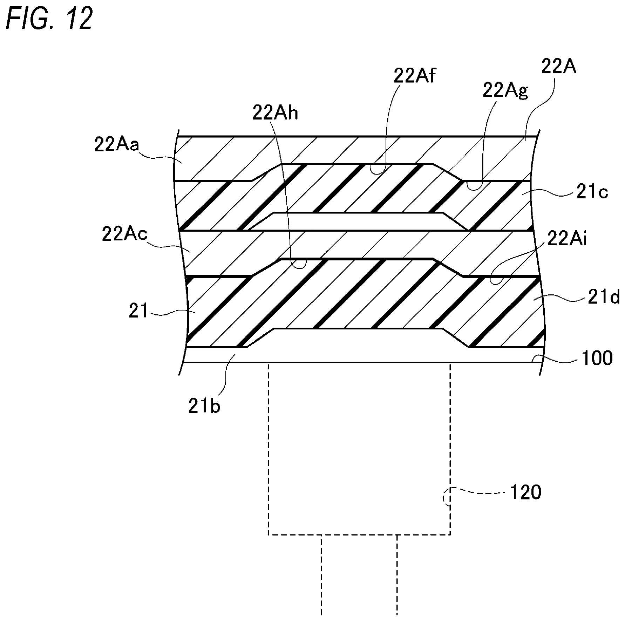

Fig. 12 is a cross-sectional view similar to Fig. 10, illustrating a part of a side seal according to a second embodiment. In the present embodiment, since only a configuration of a holding plate 22A is different from that of the first embodiment, redundant description of the configuration common to the first embodiment will be omitted.

In Fig. 10, in the rail width direction, the upper shallow groove 22f formed in the upper wall 22a of the holding plate 22A and the intermediate shallow groove 22h formed in the intermediate wall 22c are formed inside both end portions of the attachment hole 120 of the guide rail 100. On the other hand, in the present embodiment, as illustrated in Fig. 12, in the rail width direction, an upper shallow groove 22Af formed in the upper wall 22Aa of the holding plate 22A and an intermediate shallow groove 22Ah formed in the intermediate wall 22Ac are formed to protrude outward from both end portions of the attachment hole 120 of the guide rail 100. Therefore, the intermediate shallow groove 22Ah as the relief portion is wider in the rail width direction than in the first embodiment. Accordingly, the impact force applied to the lip portion 21b caused by the edge of the attachment hole 120 can be further alleviated.

The side seal urges the guide rail 100 by the interference of the lip portion 21b and receives the reaction force. Even when the relief portion is narrow in the rail width direction as in the first embodiment, or even when the relief portion is wide as in the present embodiment, the sum of the reaction forces from the guide rail 100 is the same. However, when the relief portion is narrow as in the first embodiment, the lip portion 21b is bent to be balanced, whereas when the relief portion is wide as in the present embodiment, the moment applied to the seal member 21 increases, so that the seal member 21 itself is bent to be balanced, and thus the bending of the lip portion 21b is reduced by that amount, so that the surface pressure becomes substantially the same.

### [Third Embodiment]

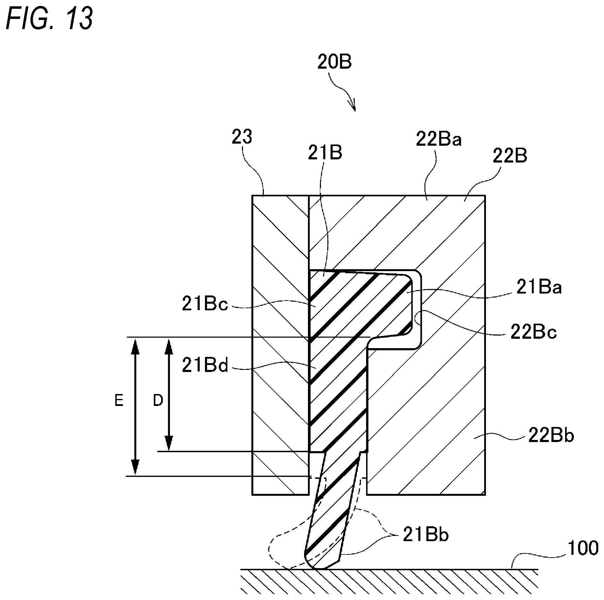

Fig. 13 is a cross-sectional view similar to Fig. 7B, illustrating a side seal 20B according to a third embodiment. In the present embodiment, since only configurations of a seal member 21B and a holding plate 22B of the side seal 20B are different from those of the first embodiment, redundant description of the configurations common to the first embodiment will be omitted.

In the present embodiment, a cross-sectional shape of the holding plate 22B orthogonal to the rail width direction is uniform along the rail width direction, whereas a cross-sectional shape of the seal member 21B orthogonal to the rail width direction differs depending on the position in the rail width direction. More specifically, the holding plate 22B is formed by connecting an upper wall 22Ba and a side wall 22Bb, and a groove recess 22Bc extending in the rail width direction adjacent to the upper wall 22Ba is formed in an upper portion of the side wall 22Bb.

The seal member 21B is formed by connecting a main body 21Ba and a lip portion 21Bb. The main body 21Ba includes an upper portion 21Bc and a lower portion 21Bd thinner than upper portion 21Bc. The lip portion 21Bb is connected to a lower surface of the lower portion 21Bd. The lower portion 21Bd is sandwiched between the cover 23 and the holding plate 22B.

The upper portion 21Bc has a uniform cross-sectional shape orthogonal to the rail width direction, whereas the lower portion 21Bd has a short distance (length in the normal direction of an abutment surface of the guide rail 100) D from the upper portion 21Bc to the lip portion 21Bb at a position corresponding to the attachment hole 120 (Fig. 1) in the rail width direction, and has a relatively long distance E from the upper portion 21Bc to the lip portion 21Bb at other positions. In Fig. 13, the lower portion 21Bd and the lip portion 21Bb at positions corresponding to the attachment hole 120 are indicated by solid lines, and the other lower portion 21Bd and lip portion 21Bb are indicated by broken lines.

According to the present embodiment, in a state where the lip portion 21Bb abuts against the surface of the guide rail 100, a connection portion between the lip portion 21Bb and the main body 21Ba at a predetermined position (position corresponding to the attachment hole 120) in the width direction of the guide rail 100 is farther from the guide rail 100 than the connection portion between the lip portion 21Bb and the main body 21Ba at a position other than the predetermined position. That is, in a state where the seal member 21B abuts against the guide rail 100, the distance D (< E) from the upper portion 21Bc to the lip portion 21Bb is short at a position corresponding to the attachment hole, and thus the interference of the lip portion 21Bb is small, and the interference of the lip portion 21Bb is large at other positions.

Therefore, the surface pressure distribution of the lip portion 21Bb in the rail width direction can be adjusted such that the surface pressure of the lip portion 21b at a position corresponding to the attachment hole with respect to the guide rail 100 is lower than the surface pressure of the lip portion 21Bb at other positions. Therefore, when the lip portion 21Bb slides with respect to the guide rail 100 in a state where the side seal 20B is assembled to the slider 200 (Fig. 1), the impact force received from the attachment hole when passing through the attachment hole from the lip portion 21Bb can be alleviated, and when the joint portion of the guide rail is present, the impact force from the edge portion can be reduced.

The present invention is not limited to the above-described embodiments, and combinations of the respective configurations of the embodiments and changes and modifications made by those skilled in the art based on the descriptions in the description and the well-known technique are intended by the present invention and are thus also included within the scope of the present invention to be protected. As the rolling element, a ball can be used instead of the roller.

Although the embodiments and the variation thereof are described above with reference to the drawings, it is needless to mention that the present invention is not limited to these examples. It is apparent for those skilled in the art to which the present invention belongs that various modified examples or corrected examples are conceivable within the scope recited in the claims, and it is understood that the above falls within the technical scope of the present invention. In addition, the components described in the above embodiments may be combined in any manner without departing from the spirit of the invention.

The present application is based on a Japanese patent application (No. 2023-130136) filed on August 9, 2023, contents of which are incorporated herein by reference.

### REFERENCE SIGNS LIST

20, 20B: side seal
21, 21B: seal member
22, 22A, 22B: holding plate
23: cover
100: guide rail
200: slider
202: end cap
203: lubricant case
300: roller

## Claims

1. A linear motion guide device comprising:
a guide rail having an attachment hole;
a slider; and
a plurality of rolling elements, wherein
the guide rail and the slider have rolling surfaces arranged to face each other to form a rolling passage of the rolling elements,
as the rolling elements roll in the rolling passage, one of the guide rail and the slider moves linearly relative to the other,
a side seal that seals between the slider and the guide rail is provided,
the side seal includes a holding plate disposed on the slider side, a cover, and a seal member disposed between the cover and the holding plate along a length direction of the guide rail,
the seal member includes a main body sandwiched between the holding plate and the cover, and a lip portion extending from the main body toward the guide rail side, and
in a state where the lip portion abuts against the guide rail, a connection portion between the lip portion and the main body at a predetermined position in a width direction of the guide rail is farther from the guide rail than a connection portion between the lip portion and the main body at a position other than the predetermined position.

2. The linear motion guide device according to claim 1, wherein
in a state where the lip portion does not abut against the guide rail, a connection portion between the lip portion and the main body at the predetermined position in the width direction of the guide rail and a connection portion between the lip portion and the main body at the position other than the predetermined position are at the same distance from the guide rail.

3. The linear motion guide device according to claim 1, wherein
a cross-sectional shape of the main body of the seal member orthogonal to the width direction of the guide rail is uniform,
a relief portion is formed at the predetermined position in the width direction of the guide rail on a surface of the holding plate facing the guide rail, and a part of the main body enters the relief portion in the state where the lip portion abuts against the guide rail.

4. The linear motion guide device according to claim 1, wherein
a cross-sectional shape of the holding plate orthogonal to the width direction of the guide rail is uniform, and
a length of the main body of the seal member in a normal direction of an abutment surface of the guide rail at the predetermined position in the width direction of the guide rail is shorter than a length of the main body in the normal direction of the abutment surface of the guide rail at the position other than the predetermined position.

5. The linear motion guide device according to any one of claims 1 to 4, wherein
the predetermined position in the width direction of the guide rail is a position corresponding to the attachment hole of the guide rail.
